# EUROPÄISCHE PATENTANMELDUNG

(11) **EP 4 286 436 A1**
(43) Veröffentlichungstag der Anmeldung: **06.12.2023**
(21) Anmeldenummer: 22176749.4
(22) Anmeldetag: 01.06.2022
(51) Int. Cl.: C08G 18/10, C08G 18/24, C08G 18/28, C08G 18/48, C08G 18/75, C08G 18/79, C09D 175/02, C09D 175/08, C09J 175/02, C09J 175/08

(54) **HÄRTBARE ZUSAMMENSETZUNG AUS POLYCARBONSÄURE UND POLYCARBODIIMID**

(71) Anmelder: Sika Technology AG, 6340 Baar (CH)
(72) Erfinder: Cannas, Rita, 8600 Dübendorf (CH); Kramer, Andreas, Zürich 8008 (CH); Burckhardt, Urs, 8049 Zürich (CH)
(74) Vertreter: Sika Patent Attorneys

(57) **Zusammenfassung**

Gegenstand der Erfindung ist eine härtbare Zusammensetzung umfassend
- eine erste Komponente enthaltend mindestens eine bei Raumtemperatur flüssige Polycarbonsäure mit einem mittleren Molekulargewicht Mₙ von 500 bis 20'000 g/mol, und
- eine zweite Komponente enthaltend mindestens ein aliphatisches Polycarbodiimid,
wobei die Zusammensetzung weniger als 10 Gewichts-% Wasser bezogen auf die gesamte Zusammensetzung enthält.

Die Zusammensetzung ist weitgehend frei von toxikologisch bedenklichen Inhaltsstoffen und härtet bei Umgebungsbedingungen schnell und störungsfrei zu einem nicht-klebrigen, dehnbaren Polymer von hoher Festigkeit aus. Die Zusammensetzung ist besonders geeignet für die Verwendung als Vergussmasse, Klebstoff oder Beschichtung mit hoher Robustheit bei der Herstellung, Lagerung und Verarbeitung, sowie hoher Beständigkeit nach der Aushärtung.

## Beschreibung

### Technisches Gebiet

Die Erfindung betrifft zweikomponentige Zusammensetzungen und ihre Verwendung als bei Raumtemperatur härtbare Vergussmassen, Klebstoffe oder Beschichtungen.

### Stand der Technik

Reaktive Polymerzusammensetzungen, die bei Raumtemperatur aushärtbar sind und als dehnbare Vergussmassen, Klebstoffe oder Beschichtungen verwendet werden können, sind bekannt. Weit verbreitet sind Polyurethansysteme, welche durch die Reaktion von Isocyanatgruppen mit Polyolen und/oder Feuchtigkeit aushärten und besonders elastische Polymere bilden. Die Formulierung, Herstellung und Verwendung von Polyurethansystemen stellt in der Praxis eine Reihe von Herausforderungen. Sie enthalten zumeist erhebliche Mengen an monomeren Diisocyanaten, welche eine Reizwirkung auf Augen, Haut und Schleimhäute ausüben können. Die Feuchteempfindlichkeit der Isocyanatgruppen kann zu vorzeitigen Vernetzungsreaktionen verbunden mit Viskositätserhöhung bis hin zur Gelierung führen und damit die Haltbarkeit bzw. Lagerstabilität beeinträchtigen. Bei einkomponentig formulierten Systemen muss das für die Aushärtung benötigte Wasser in Form von Luftfeuchtigkeit von aussen eindringen, was die Anwendung in dicken Schichten oder zwischen feuchtigkeitsdichten Substraten erschwert. Bei zweikomponentigen Systemen mit einer Polyol- und einer Isocyanat-Komponente besteht die Problematik, dass die Isocyanatgruppen nicht nur mit den Hydroxylgruppen der Polyole, sondern auch mit gegebenenfalls vorhandenem Wasser reagieren können. Besonders bei hoher Umgebungsfeuchte kann dies Blasenbildung auslösen und eine unvollkommene Polymerisation mit Kettenabbrüchen infolge nur teilweise einreagierter Polyole verursachen, was zu einem mehr oder weniger starken Verlust an Festigkeit und Elastizität führt. Bei der Verwendung von Quecksilberkatalysatoren, welche die Reaktion mit den Polyolen sehr selektiv katalysieren, treten diese Probleme kaum auf. Aufgrund ihrer hohen Toxizität sind Quecksilberkatalysatoren aber schon seit längerem nicht mehr einsetzbar. Als Alternative werden zweikomponentige Polyurethane oft mit Zinnverbindungen und/oder tertiären Aminen katalysiert, welche aber wesentlich weniger selektiv sind, wodurch insbesondere bei hoher Umgebungsfeuchtigkeit Blasen entstehen können. Eine höhere Selektivität haben Bismuth- oder Zirkonium-Katalysatoren; diese und andere alternative Metallkatalysatoren sind aber empfindlich auf Hydrolyse, wodurch die katalytische Aktivität weitgehend verloren geht, was wiederum zu Aushärtestörungen führen kann.

Ebenfalls weit verbreitet sind reaktive Polymerzusammensetzungen auf der Basis von silanfunktionellen Polymeren (SMP/STP) und Silikonen. Diese Polymersysteme härten durch Hydrolyse und Kondensation von Silangruppen aus, wobei Alkohole, vor allem Methanol oder Ethanol, oder Oxime freigesetzt werden, welche giftig sind und VOC-Emissionen verursachen; zudem enthalten sie als Vernetzer oder Trocknungsmittel meist hohe Mengen an niedrigmolekularen Silanen, welche ebenfalls gesundheitsschädlich sind. Aufgrund der Feuchteempfindlichkeit der Silangruppen sind auch diese Polymersysteme in der Herstellung und Verwendung anspruchsvoll und führen nicht immer zu den gewünschten Ergebnissen. Weiterhin bekannt sind wasserbasierte Polymersysteme, welche zumeist auf Acrylat- oder Polyurethandispersionen basieren. Diese härten über Wasserverdunstung und Koaleszenz aus und sind weitgehend frei von chemischen Reaktivgruppen. Sie können aber nur in relativ dünnen Schichten und nur zwischen offenporigen Substraten eingesetzt werden, und die Geschwindigkeit der Aushärtung ist stark abhängig von der Umgebungsfeuchte. Nach der Aushärtung besteht eine erhöhte Hydrolyseempfindlichkeit aufgrund der enthaltenen, zur Herstellung und Stabilität der Dispersion notwendigen Tenside, was zu einer verminderten Dauerhaftigkeit führen kann, insbesondere in Aussenanwendungen.

Bekannt ist die Verwendung von emulgierbaren Polycarbodiimiden zur Vernetzung von wässrigen Acryldispersionen, beispielsweise aus US 4,977,219.

### Darstellung der Erfindung

Aufgabe der vorliegenden Erfindung ist es daher, eine neue, bei Raumtemperatur härtbare Polymerzusammensetzung zur Verfügung zu stellen, welche geeignet ist als dehnbare Vergussmasse, Klebstoff oder Beschichtung und die Nachteile der bekannten Polymersysteme überwindet.

Überraschenderweise wird diese Aufgabe mit einer härtbaren Zusammensetzung wie in Anspruch 1 beschrieben gelöst. Die Zusammensetzung umfasst eine erste Komponente enthaltend mindestens eine bei Raumtemperatur flüssige Polycarbonsäure und eine zweite Komponente enthaltend mindestens ein aliphatisches Polycarbodiimid. Diese Zusammensetzung hat gegenüber Raumtemperaturhärtbaren Polymersystemen nach dem Stand der Technik mehrere vorteilhafte und überraschende Eigenschaften.

Sowohl bei der Polycarbonsäure als auch beim Polycarbodiimid handelt es sich um toxikologisch wenig bedenkliche Stoffe, welche keine Gefahrenkennzeichnung erfordern und ohne spezielle Vorkehrungen gehandhabt werden können. Die erfindungsgemässe Zusammensetzung ist nicht empfindlich gegenüber Feuchtigkeit und ermöglicht eine hohe Freiheit beim Formulieren, da in härtbaren Zusammensetzungen üblicherweise eingesetzte Zusatzstoffe in beiden Komponenten eingesetzt werden können, ohne dabei Probleme mit der Lagerstabilität der jeweiligen Komponente zu verursachen. Dadurch ist das Mischungsverhältnis der beiden Komponenten fast beliebig einstellbar, was eine grosse Freiheit bei der Verarbeitungsmethode ermöglicht. Die Zusammensetzung ist bei Umgebungsbedingungen gut verarbeitbar, ohne dass organische Lösemittel zum Lösen oder Verdünnen oder Wasser zum Emulgieren oder Dispergieren von Bestandteilen benötigt werden. Die Zusammensetzung härtet bei Umgebungsbedingungen unabhängig von Feuchtigkeit überraschend schnell und störungsfrei aus, ohne dabei Emissionen zu verursachen. Besonders vorteilhaft ist dabei, dass für eine schnelle Aushärtung keine potentiell toxische, hydrolyseempfindliche Metallkatalysatoren eingesetzt werden müssen. Falls gewünscht kann die Aushärtegeschwindigkeit durch den Einsatz von tertiären Aminen etwas verzögert werden, um die Applikation zu erleichtern. Bei der Aushärtung entsteht ein nicht-klebriges, dehnbares Polymer von hoher Festigkeit mit guter Stabilität gegenüber Hitze und Hydrolyse. Durch die Kombination dieser vorteilhaften Eigenschaften verfügt die erfindungsgemässe Zusammensetzung über eine besonders einfache Handhabung ohne besondere Schutzmassnahmen sowie eine hohe Robustheit und Langlebigkeit, sowohl bei der Herstellung und Lagerung der Komponenten, bei ihrer Verwendung in einem breiten Bereich von Umgebungs- und Applikationsbedingungen, sowie nach der Aushärtung bei mechanischer, thermischer oder chemischer Belastung.

Die erfindungsgemässe Zusammensetzung ist somit besonders geeignet für die Verwendung als dehnbare Vergussmasse, Klebstoff oder Beschichtung.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine härtbare Zusammensetzung umfassend
- eine erste Komponente enthaltend mindestens eine bei Raumtemperatur flüssige Polycarbonsäure mit einem mittleren Molekulargewicht Mₙ von 500 bis 20'000 g/mol, und
- eine zweite Komponente enthaltend mindestens ein aliphatisches Polycarbodiimid,
wobei die Zusammensetzung weniger als 10 Gewichts-% Wasser bezogen auf die gesamte Zusammensetzung enthält.

Mit "Poly" beginnende Substanznamen wie Polycarbonsäure oder Polycarbodiimid bezeichnen Substanzen, die formal zwei oder mehr der in ihrem Namen vorkommenden funktionellen Gruppen pro Molekül enthalten.

Als "Carbonsäuren" bzw. "Carbonsäuregruppen" werden auch Carbonsäuren bzw. Carbonsäuregruppen in deprotonierter und somit ionischer Form (Carboxylate) bezeichnet.

Als "Carbodiimidgruppen" werden funktionelle Gruppen der Formel ---N=C=N--- bezeichnet, welche über die gestrichelten Linien gebunden sind. Als "aliphatisch" wird ein Polycarbodiimid bezeichnet, dessen Carbodiimidgruppen an aliphatische C-Atome gebunden sind.

Als "Molekulargewicht" wird die molare Masse (in Gramm pro Mol) eines Moleküls bezeichnet. Als "mittleres Molekulargewicht" wird das Zahlenmittel des Molekulargewichts (Mₙ) einer polydispersen Mischung von oligomeren oder polymeren Molekülen bezeichnet. Es wird mittels Gelpermeationschromatographie (GPC) gegen Polystyrol als Standard bestimmt.

Eine gestrichelte Linie in den Formeln in diesem Dokument stellt jeweils die Bindung zwischen einem Substituenten und dem zugehörigen Molekülrest dar.

Als "lagerstabil" wird eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert. Als "Raumtemperatur" wird eine Temperatur von 23 °C bezeichnet. Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Die erste und die zweite Komponente der härtbaren Zusammensetzung sind für sich allein lagerstabil und werden in voneinander getrennten Gebinden gelagert, bis sie kurz vor oder während der Applikation miteinander vermischt werden.

Bevorzugt weist die Polycarbonsäure eine Viskosität bei 25 °C gemessen mittels Kegel-Platten Viskosimeter von 0.5 bis 300 Pa·s, besonders bevorzugt 1 bis 150 Pa·s, insbesondere 1 bis 100 Pa·s, auf. Eine solche Polycarbonsäure ist bei Umgebungstemperaturen auch ohne Zusatz von Lösemitteln oder Verdünnern gut handhabbar.

Bevorzugt liegt das Verhältnis der Anzahl Carbodiimidgruppen zur Anzahl Carbonsäuregruppen in der Zusammensetzung im Bereich von 0.8 bis 1.5, bevorzugt 1 bis 1.3. Eine solche Zusammensetzung härtet schnell und störungsfrei zu einem nicht-klebrigen Polymer mit hoher Festigkeit aus.

Bevorzugt weist die Polycarbonsäure ein mittleres Molekulargewicht Mₙ von 500 bis 10'000 g/mol, bevorzugt 1'000 bis 8'000 g/mol, insbesondere 1'500 bis 5'000 g/mol, auf. Eine solche Polycarbonsäure ist bei Umgebungstemperaturen auch ohne Zusatz von Lösemitteln oder Verdünnern gut handhabbar und ermöglicht Materialien von hoher Festigkeit und guter Dehnbarkeit.

Bevorzugt weist die erste Komponente insgesamt eine mittlere Carbonsäure-Funktionalität von 1.6 bis 4, bevorzugt 1.8 bis 3.5, insbesondere 2 bis 3, auf. Dies ermöglicht eine hohe Festigkeit bei guter Dehnbarkeit.

Bevorzugt ist die Polycarbonsäure ein Derivat eines Polyols mit einem mittleren Molekulargewicht Mₙ von 300 bis 12'000 g/mol, bevorzugt 800 bis 6'000 g/mol, insbesondere 1'200 bis 4'000 g/mol.

Bevorzugt ist die Polycarbonsäure ein Derivat eines Polyols mit einer OH-Zahl von 9 bis 560 mg KOH/g, bevorzugt 18 bis 150 mg KOH/g, insbesondere 28 bis 100 mg KOH/g.

Bevorzugt sind handelsübliche Polyole, wie insbesondere
- Polyetherpolyole, insbesondere Poly(oxyalkylen)diole oder Poly(oxyalkylen)-triole, insbesondere Polymerisationsprodukte von Ethylenoxid, 1,2-Propylenoxid, 1,2-Butylenoxid, 2,3-Butylenoxid, Oxetan, Tetrahydrofuran oder Mischungen davon, wobei diese mit Hilfe eines Startermoleküls mit zwei oder drei aktiven Wasserstoffatomen polymerisiert sein können, insbesondere mit Wasser, Ammoniak oder einer Verbindung mit mehreren OH- oder NH-Gruppen wie beispielsweise 1,2-Ethandiol, 1,2-Propandiol, 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen. Ebenfalls geeignet sind Polyetherpolyole mit darin dispergierten Polymerpartikeln, insbesondere solche mit Styrol-Acrylnitril-Partikeln (SAN) oder Polyharnstoff- bzw. Polyhydrazodicarbonamid-Partikeln (PHD). Bevorzugte Polyetherpolyole sind Poly(oxy-1,2-propylen)diole, Poly(oxy-1,2-propylen)triole oder sogenannte Ethylenoxid-terminierte (EO-capped) Poly(oxy-1,2propylen)diole oder -triole. Letztere werden dadurch erhalten, dass Poly(oxy-1,2-propylen)diole oder -triole nach Abschluss der Polypropoxylierungsreaktion mit Ethylenoxid weiter alkoxyliert werden und dadurch primäre Hydroxylgruppen aufweisen.
   Bevorzugte Polyetherpolyole weisen einen Ungesättigtheitsgrad von weniger als 0.02 mEq/g, insbesondere weniger als 0.01 mEq/g auf.
- Polyesterpolyole, insbesondere solche aus der Polykondensation von Hydroxycarbonsäuren bzw. Lactonen oder der Polykondensation von aliphatischen und/oder aromatischen Polycarbonsäuren mit zwei- oder mehrwertigen Alkoholen. Bevorzugt sind amorphe, Di- oder Trimerfettsäure-basierte Polyesterpolyole, wie sie kommerziell beispielsweise von der Firma Croda erhältlich sind.
- Polycarbonatpolyole, erhältlich beispielsweise durch Umsetzung von Diolen mit Dialkylcarbonaten, Diarylcarbonaten oder Phosgen.
- Mindestens zwei Hydroxylgruppen tragende Blockcopolymere, insbesondere Polyetherpolyesterpolyole.
- Polyacrylat- oder Polymethacrylatpolyole.
- Polyhydroxyfunktionelle Fette oder Öle, beispielsweise natürliche Fette und Öle, inbesondere Rizinusöl; oder durch chemische Modifizierung von natürlichen Fetten und Ölen gewonnene - sogenannte oleochemische - Polyole.
- Polykohlenwasserstoffpolyole, auch Oligohydrocarbonole genannt, wie insbesondere polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen oder Isopren, insbesondere polyhydroxyfunktionelle Acrylonitril/ Butadien-Copolymere, wie sie insbesondere aus Epoxiden oder Aminoalkoholen und carboxylterminierten Acrylonitril/Butadien-Copolymeren (beispielsweise kommerziell erhältlich unter dem Namen Hypro^{®} CTBN oder CTBNX oder ETBN von Emerald Performance Materials) hergestellt werden können; oder hydrierte polyhydroxyfunktionelle Polymere oder Copolymere von Dienen.

In einer bevorzugten Ausführungsform ist die Polycarbonsäure ein Derivat von Rizinusöl. Eine von Rizinusöl abgeleitete Polycarbonsäure ermöglicht besonders hohe Festigkeiten und eine besonders hohe Stabilität gegenüber Hitze und Hydrolyse.

Rizinusöl besteht zu etwa 80 bis 85 Gewichts-% aus dem Triglycerid der Rizinolsäure mit einem Molekulargewicht von 934 g/mol und einer OH-Funktionalität von 3. Zusätzlich sind Glyceride von weiteren Fettsäuren enthalten.

Geeignet sind Derivate von Rizinusöl oder von ethoxyliertem oder propoxyliertem Rizinusöl, wie beispielsweise die kommerziell erhältlichen ethoxylierten Rizinusöle Etocas^{®} 10 oder Etocas^{®} 35 (beide von Croda). Weiterhin geeignet sind Ketonharz-modifizierte Rizinusöle wie beispielsweise das kommerziell erhältliche Setathane^{®} D 1150 (von Allnex).

In einer weiteren bevorzugten Ausführungsform ist die Polycarbonsäure eine Dimer- oder Trimerfettsäure oder ein Derivat einer Dimer- oder Trimerfettsäure. Eine solche Polycarbonsäure ermöglicht hohe Festigkeiten und eine hohe Stabilität gegenüber Hitze und Hydrolyse.

Bevorzugt ist eine solche Polycarbonsäure das Umsetzungsprodukt eines Dimerfettsäurediols oder Trimerfettsäuretriols, oder eines Polyestersdiols oder -triols auf Basis einer Dimer- oder Trimerfettsäure, insbesondere mit einem mittleren Molekulargewicht Mₙ von 1'000 bis 4'000 g/mol.

Geeignet sind kommerzielle amorphe Dimer- oder Trimerfettsäure-basierte Polyesterdiole oder -triole, wie insbesondere die unter dem Handelsnamen Priplast^{®} erhältlichen Typen Priplast^{®} 1837, 1838, 3186, 3187, 3196, 3197, 3199 oder 3238 (von Croda).

In einer weiteren bevorzugten Ausführungsform weist die Polycarbonsäure ein Poly(oxyalkylen)-Rückgrat auf. Eine solche Polycarbonsäure ist inbesondere abgeleitet von Poly(oxyalkylen)polyolen oder von Poly(oxyalkylen)diaminen oder -triaminen.

Bevorzugt als Poly(oxyalkylen) ist Poly(oxy-1,2-ethylen), Poly(oxy-1,2-propylen), Poly(oxy-1,3-propylen), Poly(oxy-1,4-butylen), Poly(oxy-1,2-butylen) oder eine Mischform dieser Poly(oxyalkylene). Davon bevorzugt ist Poly(oxy-1,2-propylen), Poly(oxy-1,3-propylen) oder Poly(oxy-1,4-butylen), insbesondere Poly(oxy-1,2-propylen), wobei dieses einen Gehalt von 0 bis 25 Gewichts-% Poly(oxy-1,2-ethylen)-Einheiten bezogen auf das Poly(oxyalkylen)-Rückgrat enthalten kann, insbesondere an den Kettenenden. Polycarbonsäuren mit einem solchen Rückgrat sind niedrigviskos und somit besonders gut handhabbar und ermöglichen Zusammensetzungen mit besonders guter Dehnbarkeit.

Geeignet sind insbesondere Derivate von Poly(oxy-1,2-propylen)diolen oder -triolen, Ethylenoxid endcapped Poly(oxy-1,2-propylen)diolen oder -triolen oder von Poly(oxy-1,4-butylen)diolen, sowie Derivate von Poly(oxy-1,2-propylen)diaminen oder -triaminen, wie beispielsweise die kommerziell erhältlichen Jeffamine^{®} D-2000, D-4000, T-3000 oder T-5000 (alle von Huntsman), oder gemischte Poly(oxy-1,2-propylen)(oxy-1,4-butylen)diamine, wie beispielsweise die kommerziell erhältlichen Jeffamine^{®} XTJ-559 oder XTJ-652 (beide von Huntsman).

In einer weiteren bevorzugten Ausführungsform weist die Polycarbonsäure ein Kohlenwasserstoff-Rückgrat auf. Eine solche Polycarbonsäure ist insbesondere abgeleitet von Polybutadienpolyolen oder hydrierten Polybutadienpolyolen. Polybutadienpolyole sind kommerziell erhältlich, beispielsweise als Poly bd^{®} R45 HTLO oder Krasol^{®} LBH-P 2000 (beide von Cray Valley). Sie ermöglichen besonders hohe Festigkeiten und Stabilität gegenüber Hydrolyse.

Bevorzugt weist die Polycarbonsäure Endgruppen ausgewählt aus der Formel (I), der Formel (II) und der Formel (III) auf, 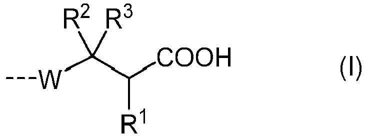 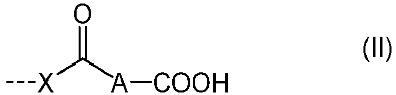 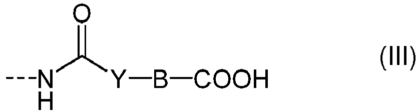 wobei
R¹, R² und R³ jeweils unabhängig voneinander für H oder Methyl stehen,
A für einen gegebenenfalls ein Sauerstoffatom enthaltenden zweiwertigen Kohlenwasserstoffrest mit 2 bis 8 C-Atomen steht,
B für einen zweiwertigen, gegebenenfalls ein Sauerstoffatom enthaltenden Kohlenwasserstoffrest mit 1 bis 8 C-Atomen steht, und
W, X, und Y unabhängig voneinander für O, NR⁴ oder S stehen, wobei R⁴ für H oder einen Alkylrest mit 1 bis 8 C-Atomen, insbesondere für H, steht.

In einer bevorzugten Ausführungsform der Erfindung weist die Polycarbonsäure Endgruppen der Formel (I) auf.

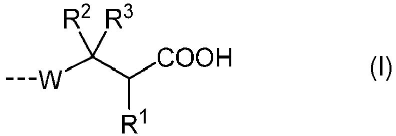

Bevorzugt steht W für NH. Eine solche Polycarbonsäure ist insbesondere ein Additionsprodukt eines Polyamins an eine α,β-ungesättigte Carbonsäure.

Als α,β-ungesättigte Carbonsäure geeignet ist insbesondere Acrylsäure, Methacrylsäure, Crotonsäure oder 2,3-Dimethylacrylsäure. Besonders geeignet ist Acrylsäure oder Methacrylsäure. R² und R³ stehen somit bevorzugt für H.

Als Polyamin besonders geeignet sind die bereits genannten Poly(oxyalkylen)-diamine oder Poly(oxyalkylen)triamine.

Besonders bevorzugt ist das Additionsprodukt eines Poly(oxy-1,2-propylen)-diamins mit mittlerem Molekulargewicht Mₙ von 2'000 bis 5'000 g/mol oder eines Glycerin- oder Trimethylolpropan-gestarteten Poly(oxy-1,2-propylen)triamins mit mittlerem Molekulargewicht Mₙ von 3'000 bis 5'000 g/mol an Acrylsäure oder Methacrylsäure. Diese Polycarbonsäuren ermöglichen besonders lange Verarbeitungszeiten und besonders hohe Dehnbarkeiten bei hoher Festigkeit.

In einer weiteren bevorzugten Ausführungsform der Erfindung weist die Polycarbonsäure Endgruppen der Formel (II) auf.

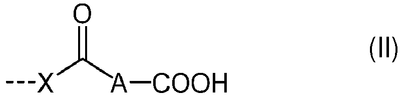

Bevorzugt steht X für O oder NH, insbesondere für O.

Bevorzugt ist A ausgewählt aus der Gruppe bestehend aus 1,2-Ethandiyl, 1,2-Propandiyl, 1,2-Isobutandiyl, 1,2-Ethendiyl, 1,2-Prop-1-endiyl, 1,2-Prop-2-endiyl, 2,3-But-2-endiyl, 1,3-Propandiyl, 2-Oxa-1,3-propandiyl, 1,4-Butandiyl, 1,7-Heptandiyl, 1,8-Octandiyl, 1,10-Decandiyl, 1,2-Cyclohexandiyl, 1,4-Cyclohexandiyl, 1,2-Cyclohex-4-endiyl, 1,2-Phenylen, 1,4-Phenylen, 3,6-Dimethyl-1,2-phenylen und 2,5-Furandiyl.

Davon bevorzugt ist 1,2-Ethandiyl oder 1,2-Phenylen.

Eine Polycarbonsäure mit Endgruppen der Formel (II) ist insbesondere ein Additionsprodukt einer Verbindung mit zwei oder mehr Hydroxylgruppen, Aminogruppen oder Mercaptogruppen an ein cyclisches Anhydrid einer Dicarbonsäure. Eine solche Polycarbonsäure ermöglicht eine besonders schnelle Aushärtung.

Als cyclisches Anhydrid geeignet ist insbesondere Bernsteinsäureanhydrid, 2-Methylbernsteinsäureanhydrid, 2,2-Dimethylbernsteinsäureanhydrid, Maleinsäureanhydrid, Citraconsäureanhydrid, Itaconsäureanhydrid, 2,3-Dimethylmaleinsäureanhydrid, Glutarsäureanhydrid, Diglykolsäureanhydrid, Hexahydrophthalsäureanhydrid, 1,2,3,6-Tetrahydrophthalsäureanhydrid, Phthalsäureanhydrid, 3,6-Dimethylphthalsäureanhydrid, insbesondere Bernsteinsäureanhydrid oder Phthalsäureanhydrid.

Besonders geeignet für diese Addition sind Polyole, insbesondere die bereits genannten, insbesondere Rizinusöl, Derivate von Rizinusöl, amorphe Dimer- oder Trimerfettsäure-basierte Polyesterdiole oder -triole, die genannten Poly(oxyalkylen)polyole oder Polybutadienpolyole. Eine solche Polycarbonsäure ermöglicht eine hohe Festigkeit und gute Dehnbarkeit bei guter Stabilität gegenüber Hydrolyse.

Weiterhin als Polycarbonsäure mit Endgruppen der Formel (II) geeignet sind Polyester aus der Veresterung von Dicarbonsäuren wie insbesondere Bernsteinsäure, Adipinsäure, Azelainsäure, Sebacinsäure, 1,12-Dodecandisäure, 1,4-Cyclohexandicarbonsäure, Terephthalsäure oder Furandicarbonsäure und Diolen wie insbesondere Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 12-Hydroxystearylalkohol, 1,4-Cyclohexandimethanol oder Dimerfettsäurediol, wobei ein Überschuss an Dicarbonsäure eingesetzt wird.

In einer weiteren bevorzugten Ausführungsform der Erfindung weist die Polycarbonsäure Endgruppen der Formel (III) auf.

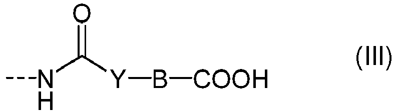

Bevorzugt steht Y für O oder NH oder S.

Bevorzugt steht B für einen Rest ausgewählt aus Methylen, 1,1-Ethandiyl, 1,2-Ethandiyl, 1,2-Propandiyl, 1,2-Phenylen, 1,3-Phenylen, 1,4-Phenylen,

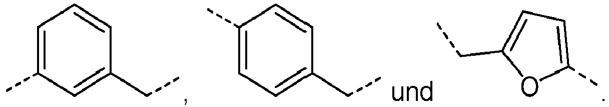

Eine Polycarbonsäure mit Endgruppen der Formel (III) ist insbesondere ein Additionsprodukt einer Hydroxycarbonsäure, Aminocarbonsäure oder Mercaptocarbonsäure an ein Polyisocyanat, insbesondere ein Isocyanatgruppen-haltiges Polymer. Dafür geeignet ist insbesondere Glykolsäure, Milchsäure, Thiomilchsäure, 4-Hydroxybenzoesäure, Salicylsäure, 2-Aminobenzoesäure, 3-Aminobenzoesäure, 4-Aminobenzoesäure, 2-Aminophenylessigsäure, 4-Aminophenylessigsäure oder 2-Carboxy-5-hydroxymethylfuran.

Bevorzugt ist Thiomilchsäure. Damit werden Polycarbonsäuren mit guter Handhabbarkeit erhalten, welche eine schnelle Aushärtung und besonders gute Dehnbarkeiten ermöglichen.

Als Polyisocyanat geeignet sind insbesondere oligomere Diisocyanate wie insbesondere HDI-Biurete, HDI-Isocyanurate, HDI-Uretdione, HDI-Iminooxadiazindione, HDI-Allophanate, IPDI-Isocyanurate oder gemischte Isocyanurate auf Basis von TDI und HDI, wobei "HDI" für 1,6-Hexandiisocyanat, "IPDI" für Isophorondiisocyanat und "TDI" für 2,4(6)-Toluylendiisocyanat steht. Bevorzugt sind von HDI abgeleitete oligomere Diisocyanate, insbesondere HDI-Biurete.

Als Polyisocyanat besonders geeignet sind Isocyanatgruppen-haltige Polymere, insbesondere Umsetzungsprodukte von Polyolen mit Diisocyanaten, insbesondere in einem molaren NCO/OH-Verhältnis von 1.5/1 bis 10/1, wobei nicht umgesetzte monomere Diisocyanate gegebenenfalls aus dem Polymer entfernt wurden. Das Isocyanatgruppen-haltige Polymer weist bevorzugt einen Gehalt an freien Isocyanatgruppen im Bereich von 0.5 bis 15 Gewichts-%, besonders bevorzugt 1 bis 10 Gewichts-%, insbesondere 1.5 bis 6 Gewichts-%, auf.

Ganz besonders bevorzugt als Isocyanatgruppen-haltiges Polymer ist ein Reaktionsprodukt aus der Umsetzung von mindestens einem Diisocyanat und mindestens einem Polyol in einem NCO/OH-Verhältnis von mindestens 3/1, bevorzugt 3/1 bis 10/1, insbesondere 4/1 bis 8/1, und nachfolgender Entfernung eines Grossteils des monomeren Diisocyanats mittels eines geeigneten Trennverfahrens, so dass das Isocyanatgruppen-haltige Polymer schliesslich einen Gehalt an monomerem Diisocyanat von höchstens 0.2 Gewichts-% bezogen auf das Polymer aufweist. Ein solches Isocyanatgruppen-haltiges Polymer ermöglicht Polycarbonsäuren mit besonders niedrigem Gehalt an monomeren Umsetzungsprodukten, was eine besonders lange Verarbeitungszeit der Zusammensetzung ermöglicht.

Als Diisocyanat geeignet ist insbesondere 1,6-Hexandiisocyanat (HDI), 2,2(4),4-Trimethyl-1,6-hexandiisocyanat (TMDI), 1-Methyl-2,4(6)-diisocyanatocyclohexan (H₆TDI), Isophorondiisocyanat (IPDI), 4,4'-Diisocyanatodicyclohexylmethan (H₁₂MDI), 4(2),4'-Diphenylmethandiisocyanat (MDI) oder 2,4(6)-Toluendiisocyanat.

Bevorzugt ist HDI, IPDI, TDI oder MDI. Besonders bevorzugt ist IPDI. Damit werden besonders gut verarbeitbare Zusammensetzungen erhalten, welche zu Polymeren mit hoher Festigkeit und guter Dehnbarkeit aushärten.

Geeignete Polyole sind die bereits genannten, insbesondere Polyetherpolyole bzw. Poly(oxyalkylen)polyole wie insbesondere Poly(oxy-1,2-propylen)diole oder -triole, Ethylenoxid endcapped Poly(oxy-1,2-propylen)diole oder -triole, Dimerfettsäure-basierte Polyesterdiole oder Trimerfettsäure-basierte Polyestertriole.

Bevorzugt ist die Polycarbonsäure weitgehend frei von flüchtigen organischen Lösemitteln. Insbesondere enthält sie weniger als 10 Gewichts-%, bevorzugt weniger als 5 Gewichts-%, besonders bevorzugt weniger als 1 Gewichts-%, flüchtige organische Lösemittel mit einem Siedepunkt bei Normaldruck von weniger als 200 °C bezogen auf die Polycarbonsäure. Dies ermöglicht härtbare Zusammensetzungen mit geringem Gehalt an flüchtigen organischen Verbindungen.

Bevorzugt ist die Polycarbonsäure ausgewählt aus der Gruppe bestehend aus Additionsprodukten von Poly(oxy-1,2-propylen)diaminen mit mittlerem Molekulargewicht Mₙ von 2'000 bis 5'000 g/mol an (Meth)acrylsäure, Additionsprodukten von Glycerin- oder Trimethylolpropan-gestarteten Poly(oxy-1,2-propylen)triaminen mit mittlerem Molekulargewicht Mₙ von 3'000 bis 5'000 g/mol an (Meth)acrylsäure, Additionsprodukten von Rizinusöl an ein Dicarbonsäureanhydrid, Additionsprodukten von ethoxyliertem oder propoxyliertem Rizinusöl an ein Dicarbonsäureanhydrid, Additionsprodukten von einem amorphen Dimerfettsäure basierten Polyesterdiol an ein Dicaronsäureanhydrid, Additionsprodukten von einem Trimerfettsäurebasierten Polyestertriol an ein Dicarbonsäureanhydrid, Additionsprodukten von einem Polybutadienpolyol an ein Dicarbonsäureanhydrid, Additionsprodukten von Milchsäure an ein Polyisocyanat und Additionsprodukten von Thiomilchsäure an ein Polyisocyanat.

Die zweite Komponente der härtbaren Zusammensetzung enthält mindestens ein aliphatisches Polycarbodiimid. Aliphatische Polycarbodiimide ermöglichen ausgehärtete Zusammensetzungen mit besonders guter Hitzestabilität. Im Gegensatz dazu zeigen entsprechende Zusammensetzungen mit aromatischen Polycarbodiimiden eine ungenügende Hitzestabilität.

Bevorzugt ist das aliphatische Polycarbodiimid bei Raumtemperatur flüssig. Ein solches Polycarbodiimid ist bei Umgebungstemperaturen auch ohne Zusatz von Lösemitteln oder Verdünnern gut handhabbar.

Die zweite Komponente weist insgesamt bevorzugt eine mittlere Carbodiimid-Funktionalität von 1.6 bis 6, bevorzugt 1.8 bis 5, insbesondere 2 bis 4, auf.

Bevorzugt ist das aliphatische Polycarbodiimid erhalten aus der Umsetzung von mindestens einem monomeren Diisocyanat mit aliphatischen Isocyanatgruppen in Gegenwart eines Carbodiimidisierungs-Katalysators unter Erhitzen und Freisetzung von CO₂. Bevorzugte Carbodiimidisierungs-Katalysatoren sind Phospholenoxide, insbesondere 3-Methyl-1-phenyl-2-phospholen-1-oxid oder 1-Methyl-2(3)-phospholen-1-oxid.

Geeignete monomere Diisocyanate mit aliphatischen Isocyanatgruppen sind insbesondere 1,6-Hexandiisocyanat (HDI), 2,2(4),4-Trimethyl-1,6-hexandiisocyanat (TMDI), Isophorondiisocyanat (IPDI), 4,4'-Diisocyanatodicyclohexylmethan (H₁₂MDI) oder o-, m- oder p-Xylendiisocyanat (XDI).

Bevorzugt sind die Carbodiimidgruppen des aliphatischen Polycarbodiimids abgeleitet von mindestens einem Diisocyanat ausgewählt aus der Gruppe bestehend aus 1,6-Hexandiisocyanat (HDI), 2,2(4),4-Trimethyl-1,6-hexandiisocyanat (TMDI), Isophorondiisocyanat (IPDI) und 4,4'-Diisocyanatodicyclohexylmethan (H₁₂MDI).

Davon bevorzugt sind HDI, IPDI und H₁₂MDI. Besonders bevorzugt ist IPDI.

Bevorzugt ist das Polycarbodiimid frei von Isocyanatgruppen. Eine solche härtbare Zusammenstzung ist nicht empfindlich auf Feuchtigkeit bei der Aushärtung und toxikologisch besonders vorteilhaft.

Als Endgruppen enthält das Polycarbodiimid bevorzugt einwertige, gegebenenfalls Ethergruppen enthaltende Kohlenwasserstoffgruppen mit 1 bis 50 C-Atomen. Zusätzlich kann das Polycarbodiimid weitere Reaktivgruppen enthalten, wie insbesondere Aziridingruppen und/oder Silangruppen.

Ein solches Isocyanatgruppen-freies Polycarbodiimid wird insbesondere erhalten, indem während oder nach der Carbodiimidisierungs-Reaktion mindestens eine Verbindung mit einer Reaktivgruppe ausgewählt aus Isocyanatgruppe, Hydroxylgruppe, primäre oder sekundäre Aminogruppe und Mercaptogruppe eingesetzt wird.

Bevorzugt als solche Verbindung sind Monoalkohole wie insbesondere Alkanole, Ethergruppen-haltige Alkanole oder Polyethermonole, insbesondere Alkanolgestartete Poly(1,2-ethylen)monole, Poly(1,2-propylen)monole oder gemischte Poly(1,2-ethylen)(1,2-propylen)monole, oder Monoisocyanate.

Gegebenenfalls wird bei der Herstellung des Polycarbodiimids eine Silan- oder Aziridingruppen aufweisende Verbindung mitverwendet, wie insbesondere ein Isocyanatosilan wie 3-Isocyanatopropyltrimethoxysilan, 3-Isocyanatopropyldimethoxymethylsilan oder 3-Isocyanatopropyl-triethoxysilan, oder Aziridin.

Ein bevorzugtes aliphatisches Polycarbodiimid ist ein Polymer und weist insbesondere die Formel (IV) auf, 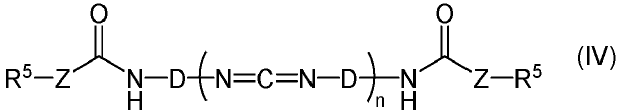 wobei
n im Mittel für 1.5 bis 6, bevorzugt 1.7 bis 5, insbesondere 2 bis 4, steht,
D für einen zweiwertigen, jeweils über ein aliphatisches C-Atom gebundenen Kohlenwasserstoffrest mit 6 bis 15 C-Atomen steht, insbesondere ausgewählt aus HDI, IPDI und H₁₂MDI nach Entfernung der beiden Isocyanatgruppen,
R⁵ für einen gegebenenfalls Ethergruppen aufweisenden Kohlenwasserstoffrest mit 1 bis 50 C-Atomen steht, und
Z für O, NR⁶ oder S steht und R⁶ für H oder einen Alkylrest mit 1 bis 8 C-Atomen steht.

Bevorzugt steht Z für O.

Bevorzugt steht R⁵ für einen Alkylrest mit 1 bis 20 C-Atomen oder für einen Rest der Formel 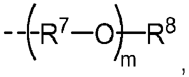 wobei m für 1 bis 25, R⁷ für 1,2-Ethylen oder 1,2-Propylen und R⁸ für einen einwertigen Kohlenwasserstoffrest mit 1 bis 20 C-Atomen steht.

Ein aliphatisches Polycarbodiimid der Formel (IV) wird insbesondere erhalten aus der Carbodiimidisierung von HDI, IPDI und/oder H₁₂MDI und Umsetzung mit mindestens einem monofunktionellen Alkohol mit 1 bis 50 C-Atomen, insbesondere mindestens einem Polyethermonol mit Oxy-1,2-ethylen- und/oder Oxy-1,2-propylen-Einheiten.

Bevorzugt ist das aliphatische Polycarbodiimid weitgehend frei von flüchtigen organischen Lösemitteln. Insbesondere enthält es weniger als 10 Gewichts-%, bevorzugt weniger als 5 Gewichts-%, besonders bevorzugt weniger als 1 Gewichts-%, flüchtige organische Lösemittel mit einem Siedepunkt bei Normaldruck von weniger als 200 °C, bezogen auf das Polycarbodiimid. Dies ermöglicht härtbare Zusammensetzungen mit geringem Gehalt an flüchtigen organischen Verbindungen und somit geringer Toxizität und Emission.

Geeignete aliphatische Polycarbodiimide sind kommerziell erhältlich, beispielsweise Picassian^{®} LX-725 oder Picassian^{®} LX-755 (beide von Stahl).

Die härtbare Zusammensetzung kann zum Verzögern der Aushärtereaktion mindestens ein tertiäres Amin enthalten. Bevorzugt ist Triethylamin oder Triethanolamin. Bevorzugt wird eine solche Menge tertiäres Amin eingesetzt, dass die Verarbeitung der Zusammensetzung ohne Probleme möglich ist. Dies hängt von der Anwendung und der Applikationsmethode ab. Bevorzugt liegen mindestens 20 %, besonders bevorzugt mindestens 50 %, insbesondere mindestens 70 %, der Carbonsäuregruppen als nichtionische Säuren vor.

Die härtbare Zusammensetzung kann zusätzlich weitere Bestandteile enthalten, insbesondere die Folgenden:
- Füllstoffe, insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, industriell hergestellte Russe, Graphit, MetallPulver, beispielsweise von Aluminium, Kupfer, Eisen, Silber oder Stahl, PVC-Pulver oder Hohlkugeln;
- Fasern, insbesondere Glasfasern, Kohlefasern, Metallfasern, Keramikfasern, Hanffasern, Zellulosefasern oder Kunststofffasern wie Polyamidfasern oder Polyethylenfasern;
- Nanofüllstoffe wie Graphen oder Carbon Nanotubes;
- Farbstoffe;
- Pigmente, insbesondere Titandioxid, Chromoxid, Eisenoxide oder organische Pigmente;
- Weichmacher, insbesondere Phthalate, insbesondere Diisononylphthalat (DINP), Diisodecylphthalat (DIDP) oder Di(2-propylheptyl)phthalat (DPHP), hydrierte Phthalate, insbesondere Diisononyl-1,2-cyclohexandicarboxylat (DINCH), Terephthalate, insbesondere Bis(2-ethylhexyl)terephthalat oder Diisononylterephthalat (DINT), hydrierte Terephthalate, insbesondere Bis(2-ethylhexyl)-1,4-cyclohexandicarboxylat oder Diisononyl-1,4-cyclohexandicar-boxylat, Isophthalate, Trimellitate, Adipate, insbesondere Dioctyladipat (DOA), Azelate, Sebacate, Benzoate, Glycolether, Glycolester, Weichmacher mit Polyetherstruktur, insbesondere Polypropylenoxid-monole, -diole oder -triole, oder Polypropylenoxid-monole, -diole oder -triole mit blockierten Hydroxylgruppen, insbesondere in der Form von Acetatgruppen, organische Sulfonate oder Phosphate, insbesondere Diphenylkresylphosphat (DPK), Polybutene, Polyisobutene oder von natürlichen Fetten oder Ölen abgeleitete Weichmacher, insbesondere epoxidiertes Soja- oder Leinöl, insbesondere Phthalate, hydrierte Phthalate, Adipate oder Weichmacher mit Polyetherstruktur;
- Lösemittel;
- Modifizierungsmittel wie Kohlenwasserstoffharze, natürliche oder synthetische Wachse oder Bitumen;
- Rheologie-Modifizierer, insbesondere Harnstoffverbindungen, Schichtsilikate wie Bentonite, Derivate von Rizinusöl, hydriertes Rizinusöl, Polyamide, Polyurethane, pyrogene Kieselsäuren oder hydrophob modifizierte Polyoxyethylene;
- Trocknungsmittel, insbesondere Molekularsiebe, Calciumoxid, Mono-Oxazolidine wie Incozol^{®} 2 (von Incorez) oder Orthoameisensäureester;
- Haftvermittler, insbesondere Titanate oder Organoalkoxysilane wie Aminosilane, Mercaptosilane, Epoxysilane, Vinylsilane, (Meth)acrylsilane, Carbamatosilane, Alkylsilane, S-(Alkylcarbonyl)mercaptosilane oder oligomere Formen dieser Silane;
- Katalysatoren;
- nicht-reaktive thermoplastische Polymere, wie Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- flammhemmende Substanzen, insbesondere die bereits genannten Füllstoffe Aluminiumhydroxid oder Magnesiumhydroxid, organische Phosphorsäureester, Ammoniumpolyphosphate, Melamin oder Derivate davon, Borverbindungen oder Antimonverbindungen;
- Additive, insbesondere Netzmittel, Verlaufmittel, Entschäumer, Entlüfter, Stabilisatoren gegen Oxidation, Wärme, Licht oder UV-Strahlung oder Biozide;
sowie weitere üblicherweise in härtbaren Zusammensetzungen eingesetzte Substanzen.

Solche Zusätze können als Bestandteil der ersten oder der zweiten Komponente vorhanden sein. Mit Carbodiimidgruppen reaktive Substanzen sind bevorzugt ein Bestandteil der ersten Komponente. Mit Carbonsäuregruppen reaktive Substanzen sind bevorzugt ein Bestandteil der zweiten Komponente.

Bevorzugt enthält die härtbare Zusammensetzung zusätzlich mindestens einen weiteren Bestandteil ausgewählt aus Weichmachern, Füllstoffen und Rheologie-Modifizierern. Bevorzugt enthält die härtbare Zusammensetzung mehrere solche weitere Bestandteile.

Die härtbare Zusammensetzung enthält weniger als 10 Gewichts-%, bevorzugt weniger als 5 Gewichts-%, insbesondere weniger als 2 Gewichts-%, Wasser bezogen auf die gesamte Zusammensetzung. Eine solche Zusammensetzung ist nicht wasserbasiert. Sie härtet unabhängig von der herrschenden Umgebungsfeuchte schnell aus und kann in dicken Schichten und/oder zwischen wasserdichten Substraten eingesetzt werden.

Die härtbare Zusammensetzung enthält bevorzugt weniger 10 Gewichts-%, besonders bevorzugt weniger als 5 Gewichts-%, insbesondere weniger als 1 Gewichts-%, flüchtige organische Lösemittel mit einem Siedepunkt bei Normaldruck von weniger als 200 °C bezogen auf die gesamte Zusammensetzung. Eine solche Zusammensetzung verursacht besonders wenig Emissionen.

Bevorzugt umfasst die härtbare Zusammensetzung
- 10 bis 100 Gewichts-%, bevorzugt 20 bis 70 Gewichts-%, der Summe aus Polycarbonsäuren und Polycarbodiimiden,
- 0 bis 50 Gewichts-%, bevorzugt 10 bis 40 Gewichts-%, Weichmacher,
- 0 bis 90 Gewichts-%, bevorzugt 20 bis 80 Gewichts-%, Füllstoffe,
- und gegebenenfalls weitere Substanzen,
bezogen auf die gesamte Zusammensetzung.

Die Konsistenz der ersten und der zweiten Komponenten der härtbaren Zusammensetzung ist geeigneterweise so, dass die Komponenten bei Umgebungsbedingungen mit einfachen Verfahren gut miteinander vermischt werden können. Dazu sind insbesondere flüssige oder pastöse Komponenten geeignet.

Die erste und die zweite Komponente der härtbaren Zusammensetzung werden getrennt voneinander hergestellt. Dabei werden die Bestandteile der jeweiligen Komponente miteinander vermischt, so dass eine makroskopisch homogene Masse entsteht. Jede Komponente wird in einem separaten Gebinde gelagert. Geeignete Gebinde sind insbesondere ein Fass, ein Container, ein Hobbock, ein Eimer, ein Kanister, eine Büchse, ein Beutel, ein Schlauchbeutel, eine Kartusche oder eine Tube. Die Komponenten sind lagerstabil.

Zur Anwendung der härtbaren Zusammensetzung werden die beiden Komponenten und gegebenenfalls vorhandene weitere Komponenten kurz vor oder während der Applikation miteinander vermischt. Das Mischungsverhältnis wird dabei so gewählt, dass das Verhältnis der Anzahl Carbodiimidgruppen zur Anzahl Carbonsäuregruppen im Bereich von 0.7 bis 1.5, bevorzugt 0.8 bis 1.3, insbesondere 0.9 bis 1.2, liegt. In Gewichtsteilen liegt das Mischungsverhältnis zwischen der ersten und der zweiten Komponente typischerweise im Bereich von 50:1 bis 1:5, insbesondere 20:1 bis 1:2.

Werden die Komponenten vor der Applikation miteinander vermischt, so muss darauf geachtet werden, dass zwischen dem Vermischen der Komponenten und der Applikation nicht zu viel Zeit vergeht, da es sonst durch die einsetzende Reaktion und den damit verbundenen Anstieg der Viskosität zu Störungen wie beispielsweise einem ungenügenden Verlauf oder einer verlangsamten oder unvollständigen Haftung zum Substrat kommen kann. Insbesondere soll die Offenzeit der Zusammensetzung während der Applikation nicht überschritten werden.

Als "Offenzeit" wird dabei die Zeitspanne zwischen dem Vermischen der Komponenten und dem Ende eines für die Verarbeitung geeigneten Zustands der Zusammensetzung bezeichnet.

Das Vermischen erfolgt bevorzugt bei Umgebungstemperatur, insbesondere bei einer Temperatur im Bereich von -5 bis 50°C, insbesondere 0 bis 40°C.

Mit dem Vermischen der beiden Komponenten beginnt die Zusammensetzung durch die einsetzende chemische Reaktion auszuhärten. Dabei reagieren hauptsächlich die Carbonsäuregruppen mit den Carbodiimidgruppen zu einer stabilen Bindung, wodurch die Zusammensetzung allmählich zu einem festen Polymer aushärtet. Es kann vermutet werden, dass dabei N-Acylharnstoffgruppen der

Formel 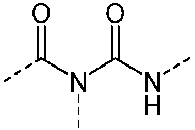 entstehen.

Die Aushärtung erfolgt bevorzugt bei Umgebungstemperatur, insbesondere bei einer Temperatur im Bereich von -5 bis 50 °C, insbesondere 0 bis 40 °C.

Ein weiterer Gegenstand der Erfindung ist die ausgehärtete Zusammensetzung, erhalten aus der härtbaren Zusammensetzung nach dem Vermischen der beiden Komponenten.

Bevorzugt ist die ausgehärtete Zusammensetzung elastisch und weist eine hohe Festigkeit bei guter Dehnbarkeit auf.

Bevorzugt weist die ausgehärtete Zusammensetzung eine Zugfestigkeit, bestimmt gemäss DIN EN 53504 wie in den Beispielen beschrieben, von mindestens 0.7 MPa, bevorzugt mindestens 1 MPa, insbesondere mindestens 1.5 MPa, auf. Bevorzugt weist die ausgehärtete Zusammensetzung eine Shore A-Härte, bestimmt gemäss DIN 53505 wie in den Beispielen beschrieben, im Bereich von 10 bis 90, bevorzugt 20 bis 85, insbesondere 30 bis 80, auf.

Bevorzugt weist die ausgehärtete Zusammensetzung eine Bruchdehnung, bestimmt gemäss DIN EN 53504 wie in den Beispielen beschrieben, von mindestens 10 %, bevorzugt mindestens 30 %, auf.

Weiterhin verfügt die ausgehärtete Zusammensetzung über eine gute Hitze- und Hydrolysestabilität. Bevorzugt zeigt die ausgehärtete Zusammensetzung auch nach einer Lagerung während 7 Tagen bei 100 °C oder bei 70 °C und 100 % relativer Feuchtigkeit eine hohe Dehnbarkeit, Festigkeit und Härte.

Die härtbare Zusammensetzung eignet sich für eine Vielzahl von Verwendungen. Sie kann insbesondere als Klebstoff, Dichtstoff, Beschichtung, Giessharz oder Spachtelmasse verwendet werden.

Ein weiterer Gegenstand der Erfindung ist die Verwendung der härtbare Zusammensetzung als Vergussmasse, Klebstoff oder Beschichtung, wobei die erste und die zweite und gegebenenfalls vorhandene weitere Komponenten miteinander vermischt werden und die vermischte Zusammensetzung im flüssigen Zustand auf mindestens ein Substrat appliziert wird.

Geeignete Substrate sind insbesondere:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC);
- Isolierschäume, insbesondere aus EPS, XPS, PUR, PIR, Steinwolle, Glaswolle, Aerogel oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke.

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Aus der Verwendung der härtbaren Zusammensetzung wird ein Artikel erhalten. Der Artikel ist insbesondere mit der Zusammensetzung verfüllt, verklebt oder beschichtet. Dieser Artikel kann ein Bauwerk oder ein Teil davon sein, insbesondere ein Bauwerk des Hoch- oder Tiefbaus, eine Brücke, ein Dach, ein Treppenhaus, eine Fassade oder eine Bodenbeschichtung, oder er kann ein industrielles Gut oder ein Konsumgut sein, insbesondere ein Rohr, ein Rotorblatt einer Windkraftanlage, eine Haushaltmaschine oder ein Verkehrsmittel wie insbesondere ein Automobil, ein Bus, ein Lastkraftwagen, ein Schienenfahrzeug, ein Schiff, ein Flugzeug oder ein Helikopter oder ein Anbauteil davon.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Beschreibung der Messmethoden:

Die **Viskosität** wurde auf einem thermostatisierten Kegel-Platten-Viskosimeter Rheotec RC30 (Kegeldurchmesser 10 mm, Kegelwinkel 1°, Kegelspitze-PlattenAbstand 0.05 mm, Scherrate 10 s⁻¹) gemessen.

Die **Aminzahl** wurde durch Titration bestimmt (mit 0.1N HClO₄ in Essigsäure gegen Kristallviolett).

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen. Die Absorptionsbanden sind in Wellenzahlen (cm⁻¹) angegeben.

### Herstellung von Polvcarbonsäuren:

### Säure S1:

In einem Rundkolben wurden 122.84 g (0.18 mol NH₂) Polyetherdiamin (Jeffamine^{®} XTJ-559, propoxyliertes Poly(oxy-1,4-butylen)-Gerüst, Aminzahl 82.7 mg KOH/g, von Huntsman) vorgelegt, mit 13.05 g (0.18 mol) Acrylsäure vermischt und die Mischung während 15 min bei Raumtemperatur gerührt. Erhalten wurde eine gelbliche klare Flüssigkeit mit einer Viskosität von 210 Pa·s bei 25 °C und einem berechneten Carbonsäure-Equivalentgewicht von 755 g/eq.

FT-IR: 2935, 2853, 2795, 1725, 1638, 1564, 1447, 1413, 1371, 1351, 1296, 1264, 1243, 1205, 1103, 1014, 990, 958, 886, 867, 836, 745.

### Säure S2:

In einem Rundkolben wurden 77.66 g (0.078 mol NH₂) Polyetherdiamin (Jeffamine^{®} D-2000, Poly(oxy-1,2-propyen)-Gerüst, Aminzahl 56.2 mg KOH/g, von Huntsman) vorgelegt, mit 5.62 g (0.08 mol) Acrylsäure vermischt und die Mischung während 50 min bei Raumtemperatur gerührt. Erhalten wurde eine gelbliche klare Flüssigkeit mit einer Viskosität von 55 Pa·s bei 25 °C und einem berechneten Carbonsäure-Equivalentgewicht von 1'041 g/eq.

FT-IR: 2970, 2930, 2868, 1725, 1638, 1558, 1454, 1412, 1373, 1347, 1296, 1264, 1096, 1013, 925, 866, 836, 700.

### Säure S3:

In einem Rundkolben wurden 221.06 g (0.10 mol NH₂) Polyetherdiamin (Jeffamine^{®} D-4000, Poly(oxy-1,2-propyen)-Gerüst, Aminzahl 25.6 mg KOH/g, von Huntsman) vorgelegt, mit 7.27 g (0.10 mol) Acrylsäure vermischt und die Mischung während 20 min bei Raumtemperatur gerührt. Erhalten wurde eine gelbliche klare Flüssigkeit mit einer Viskosität von 18.6 Pa·s bei 25 °C und einem berechneten Carbonsäure-Equivalentgewicht von 2'283 g/eq.

FT-IR: 2970, 2930, 2867, 1640, 1564, 1455, 1372, 1346, 1296, 1263, 1096, 1013, 925, 866, 835.

### Säure S4:

In einem Rundkolben wurden 150.72 g (0.067 mol NH₂) Polyethertriamin (Jeffamine^{®} T-5000, Glycerin gestartetes Poly(oxy-1,2-propyen)triamin, Aminzahl 24.9 mg KOH/g, von Huntsman) vorgelegt, mit 4.83 g (0.067 mol) Acrylsäure vermischt und die Mischung während 50 min bei Raumtemperatur gerührt. Erhalten wurde eine dunkelgelbe klare Flüssigkeit mit einer Viskosität von 29 Pa·s bei 25 °C und einem berechneten Carbonsäure-Equivalentgewicht von 2'322 g/eq.

FT-IR: 2970, 2930, 2867, 1639, 1568, 1454, 1372, 1344, 1296, 1255, 1094, 1013, 925, 868, 834.

### Säure S5:

In einem Rundkolben wurden 202.0 g (0.087 mol NCO) eines Isocyanatgruppenhaltigen Polymers mit NCO-Gehalt 1.8 Gewichts-% und Funktionalität 2.3, hergestellt wie nachfolgend beschrieben, mit 8.8 g (0.087 mol) Milchsäure unter Ausschluss von Feuchtigkeit bei 100 °C umgesetzt, bis mittels IR-Spektroskopie keine Isocyanatgruppen mehr nachweisbar waren. Erhalten wurde eine gelbliche klare Flüssigkeit mit einer Viskosität von 308 Pa·s bei 25 °C und einem berechneten Carbonsäure-Equivalentgewicht von 2'423 g/eq.

Das Polymer mit NCO-Gehalt 1.8 Gewichts-% wurde hergestellt, indem 780 g Glycerin-gestartetes Ethylenoxid endcapped Poly(oxy-1,2-propyen)triol (Desmophen^{®} 5031 BT, OH-Zahl 28.0 mg KOH/g, Funktionalität ca. 2.3, von Covestro) und 220 g Isophorondiisocyanat (Vestanat^{®} IPDI, von Evonik) in Gegenwart von 0.01 g Dibutylzinndilaurat bei 80 °C umgesetzt und anschliessend das monomere Isophorondiisocyanat in einem Kurzwegverdampfer bis zu einem Gehalt von 0.02 Gewichts-% destillativ entfernt wurde.

### Säure S6:

In einem Rundkolben wurden 212.3 g (0.091 mol NCO) des Isocyanatgruppenhaltigen Polymers mit NCO-Gehalt 1.8 Gewichts-% und Funktionalität 2.3, hergestellt wie für Säure **S5** beschrieben, mit 9.7 g (0.091 mol) Thiomilchsäure unter Ausschluss von Feuchtigkeit bei 100 °C umgesetzt, bis mittels IR-Spektroskopie keine Isocyanatgruppen mehr nachweisbar waren. Erhalten wurde eine gelbliche klare Flüssigkeit mit einer Viskosität von 216 Pa·s bei 25 °C und einem berechneten Carbonsäure-Equivalentgewicht von 2'440 g/eq.

### Säure S7:

In einem Rundkolben wurden 176.6 g (0.076 mol NCO) des Isocyanatgruppenhaltigen Polymers mit NCO-Gehalt 1.8 Gewichts-% und Funktionalität 2.3, hergestellt wie für Säure **S5** beschrieben, mit 10.4 g (0.076 mol) p-Aminobenzoesäure in 170.3 g Diisodecylphthalat (DIDP) unter Ausschluss von Feuchtigkeit bei 60 °C umgesetzt, bis mittels IR-Spektroskopie keine Isocyanatgruppen mehr nachweisbar waren. Erhalten wurde eine gelbliche klare Flüssigkeit mit einer Viskosität von 77 Pa·s bei 25 °C und einem berechneten Carbonsäure-Equivalentgewicht von 4'701 g/eq (inklusiv DIDP, bzw. 2'461 g/eq ohne DIDP).

### Säure S8:

In einem Rundkolben wurden 84.6 g (0.071 mol OH) Hydroxy-terminiertes Polybutadien (Poly bd^{®} R45 HTLO, OH-Zahl 47 mg KOH/g, OH-Funktionalität ca. 2.5, von Cray Valley) vorgelegt, mit 7.2 g (0.072 mol) Bernsteinsäureanhydrid und 0.1 g Methansulfonsäure vermischt und die Mischung während 3 Stunden bei 130 °C gerührt. Erhalten wurde eine gelbliche klare Flüssigkeit mit einer Viskosität von 41 Pa·s bei 25 °C und einem berechneten Carbonsäure-Equivalentgewicht von 1'294 g/eq.

FT-IR: 3074, 3005, 2979, 2914, 2844, 1740, 1714, 1639, 1435, 1352, 1291, 1256, 1235, 1208, 1166, 1075, 1047, 993, 964, 910, 843, 803, 723.

### Säure S9:

In einem Rundkolben wurden 61.0 g (0.18 mol OH) Rizinusöl (OH-Zahl 165 mg KOH/g) vorgelegt, mit 18.0 g (0.18 mol) Bernsteinsäureanhydrid und 0.1 g Methansulfonsäure vermischt und die Mischung während 3 Stunden bei 130 °C gerührt. Erhalten wurde eine bräunliche klare Flüssigkeit mit einer Viskosität von 6.4 Pa·s bei 25 °C und einem berechneten Carbonsäure-Equivalentgewicht von 439 g/eq.

FT-IR: 2925, 2855, 2733, 2712, 1456, 1435, 1417, 1378, 1342, 1163, 1099, 1048, 1025, 993, 958, 906, 840, 724.

### Säure S10:

In einem Rundkolben wurden 101.5 g (0.208 mol OH) ethoxyliertes Rizinusöl (Etocas^{®} 10, OH-Zahl 115 mg KOH/g, OH-Funktionalität ca. 2.7, von Croda) vorgelegt, mit 30.9 g (0.209 mol) Phthalsäureanhydrid und 0.1 g Methansulfonsäure vermischt und die Mischung während 5 Stunden bei 130 °C gerührt. Erhalten wurde eine gelbliche klare Flüssigkeit mit einer Viskosität von 12.1 Pa·s bei 25 °C und einem berechneten Carbonsäure-Equivalentgewicht von 637 g/eq. FT-IR: 2924, 2855, 1789, 1726, 1600, 1455, 1417, 1351, 1285, 1257, 1120, 1071, 1039, 948, 898, 856, 788, 742, 713.

### Säure S11:

In einem Rundkolben wurden 100.0 g (0.10 mol OH) Dimerfettsäure-basiertes amorphes Polyesterdiol (Priplast^{®} 1838, OH-Zahl 56 mg KOH/g, von Croda) vorgelegt, mit 10.0 g (0.10 mol) Bernsteinsäureanhydrid und 0.1 g Methansulfonsäure vermischt und die Mischung während 2 Stunden bei 130 °C gerührt. Erhalten wurde eine gelbliche klare Flüssigkeit mit einer Viskosität von 71 Pa·s bei 25 °C und einem berechneten Carbonsäure-Equivalentgewicht von 1'101 g/eq. FT-IR: 2922, 2853, 1735, 1462, 1418, 1391, 1354, 1236, 1164, 1119, 1071, 989, 906, 826, 756, 724.

### Säure S12:

In einem Rundkolben wurden 101.25 g (0.10 mol OH) Dimerfettsäure-basiertes amorphes Polyesterdiol (Priplast^{®} 1838, OH-Zahl 56 mg KOH/g, von Croda) vorgelegt, mit 15.0 g (0.10 mol) Phthalsäureanhydrid und 0.1 g Methansulfonsäure vermischt und die Mischung während 1 Stunde bei 150 °C gerührt. Erhalten wurde eine gelbliche klare Flüssigkeit mit einer Viskosität von 72 Pa·s bei 25 °C und einem berechneten Carbonsäure-Equivalentgewicht von 1'164 g/eq.

FT-IR: 2922, 2853, 1789, 1732, 1601, 1263, 1376, 1287, 1257, 1169, 1122, 1072, 1038, 984, 899, 788, 741, 725.

### Säure S13:

In einem Rundkolben wurden 99.8 g (0.068 mol OH) Dimerfettsäure-basiertes amorphes Polyesterdiol (Priplast^{®} 3196, OH-Zahl 37 mg KOH/g, von Croda) vorgelegt, mit 6.8 g (0.068 mol) Bernsteinsäureanhydrid und 0.1 g Methansulfonsäure vermischt und die Mischung während 2 Stunden bei 130 °C gerührt. Erhalten wurde eine gelbliche klare Flüssigkeit mit einer Viskosität von 91 Pa·s bei 25 °C und einem berechneten Carbonsäure-Equivalentgewicht von 1'569 g/eq. FT-IR: 2922, 2852, 1735, 1463, 1353, 1235, 1164, 1118, 1067, 989, 894, 723.

### Säure S14:

In einem Rundkolben wurden 105.4 g (0.071 mol OH) Dimerfettsäure-basiertes amorphes Polyesterdiol (Priplast^{®} 3196, OH-Zahl 37 mg KOH/g, von Croda) vorgelegt, mit 10.5 g (0.071 mol) Phthalsäureanhydrid und 0.1 g Methansulfonsäure vermischt und die Mischung während 2 Stunden bei 130 °C gefolgt von 30 Minuten bei 140 °C gerührt. Erhalten wurde eine gelbliche klare Flüssigkeit mit einer Viskosität von 92 Pa·s bei 25 °C und einem berechneten Carbonsäure-Equivalentgewicht von 1'634 g/eq.

FT-IR: 2922, 2852, 1733, 1601, 1463, 1417, 1376, 1286, 1257, 1168, 1122, 1072, 1039, 983, 899, 741, 724.

**Tabelle 1: Übersicht über die hergestellten Polycarbonsäuren**

| | Polymer-Rückgrat | Funktionalität | Viskosität 25°C [Pa·s] | Equivalentgewicht [g/eq] |
|---|---|---|---|---|
| Säure **S1** | Oxyalkylen | 2 | 210 | 755 |
| Säure **S2** | Oxy-1,2-propylen | 2 | 55 | 1'041 |
| Säure **S3** | Oxy-1,2-propylen | 2 | 18.6 | 2'283 |
| Säure **S4** | Oxy-1,2-propylen | 3 | 29 | 2'322 |
| Säure **S5** | EO capped Oxy-1,2-propylen | 2.3 | 308 | 2'423 |
| Säure **S6** | EO capped Oxy-1,2-propylen | 2.3 | 216 | 2'440 |
| Säure **S7** | EO capped Oxy-1,2-propylen | 2.3 | 77 | 4'701 (2'461 ohne DIDP) |
| Säure **S8** | Kohlenwasserstoff | 2.5 | 41 | 1'294 |
| Säure **S9** | Rizinusöl | 2.7 | 6.4 | 439 |
| Säure **S10** | Rizinusöl | 2.7 | 12.1 | 637 |
| Säure **S11** | Fettsäure / Polyester | 2 | 71 | 1'101 |
| Säure **S12** | Fettsäure / Polyester | 2 | 72 | 1'164 |
| Säure **S13** | Fettsäure / Polyester | 2 | 91 | 1'569 |
| Säure **S14** | Fettsäure / Polyester | 2 | 92 | 1'634 |

### verwendete Polycarbodiimide:

### PCDI XL-725:

Kommerzielles Polycarbodiimid mit aliphatischen Carbodiimidgruppen und einem Carbodiimid-Equivalentgewicht von 700 g/eq (Picassian^{®} LX-725, von Stahl), mit einer Viskosität von 4.4 Pa·s bei 25 °C.

### PCDI XL-755:

Kommerzielles Polycarbodiimid mit aliphatischen Carbodiimidgruppen und einem Carbodiimid-Equivalentgewicht von 850 g/eq (Picassian^{®} LX-755, von Stahl), mit einer Viskosität von 7.7 Pa·s bei 25 °C.

### PCDI AR-1:

In einem Rundkolben wurden 218.3 g (0.109 mol NCO) eines aromatische Isocyanatgruppen-haltigen Polymers mit NCO-Gehalt 2.1 Gewichts-%, hergestellt wie nachfolgend beschrieben, vorgelegt, mit 13.0 g (0.109 mol NCO) Phenylisocyanat, 0.35 g 3-Methyl-1-phenyl-2-phospholen-1-oxid und 350 g Diisodecylphthalat (DIDP) unter Stickstoffatmosphäre vermischt und während 6 Stunden bei 100 °C umgesetzt. Dabei wurde jede halbe Stunde kurz Vakuum angelegt, um entstandenes CO₂ zu entfernen. Erhalten wurde eine gelbliche klare Flüssigkeit mit einem berechneten Carbodiimid-Equivalentgewicht von 5'336 g/eq (inklusiv DIDP, bzw. 1'943 g/eq ohne DIDP).

FT-IR: 2957, 2927, 2857, 2138, 2112, 1730, 1595, 1532, 1455, 1374, 1340, 1301, 1245, 1171, 1126, 1102, 1031, 993, 923, 852, 817, 758, 690.

Das Polymer mit aromatischen Isocyanatgruppen wurde hergestellt, indem 130 g Polyoxypropylen-Diol (Acclaim^{®} 4200, von Covestro; OH-Zahl 28.5 mg KOH/g), 260 g Glycerin-gestartetes Ethylenoxid endcapped Poly(oxy-1,2-propyen)triol (Caradol^{®} MD34-02, von Shell; OH-Zahl 35.0 mg KOH/g), 60 g 4,4'-Diphenylmethandiisocyanat (Desmodur^{®} 44 MC L, von Covestro) und 50 g Diisodecylphthalat bei 80 °C zu einem Polymer mit NCO-Gehalt 2.1 Gewichts-% umgesetzt wurden.

### Herstellung von härtbaren Zusammensetzungen:

### Beispiele Z-1 bis Z-20:

Für jedes Beispiel wurden die in den Tabellen 2 bis 4 angegebenen Inhaltsstoffe der ersten-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt.

Als zweite Komponente wurde das in den Tabellen 2 bis 4 angegebene Polycarbodiimid in der angegebenen Menge eingesetzt.

Die beiden Komponenten jeder Zusammensetzung wurden mittels des Zentrifugalmischers zu einer homogenen Flüssigkeit verarbeitet und diese unverzüglich folgendermassen geprüft:
Die **Gelierzeit** wurde bestimmt, indem eine frisch vermischte Menge von ca. 3 g im Normklima mit einem Spatel in regelmässigen Abständen bewegt wurde, bis die Masse gelierte.

Zur Bestimmung der mechanischen Eigenschaften wurde die vermischte Zusammensetzung auf einem silikonbeschichteten Trennpapier zu einem Film von 2 mm Dicke aufgebracht, dieser während 10 Tagen im Normklima gelagert, einige hantelförmige Prüfkörper mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit, Bruchdehnung** und **E-Modul 5%** (bei 0.5-5% Dehnung) geprüft. Diese Resultate sind mit dem Zusatz **"10d NK"** versehen.

Zur Bestimmung der Hitzestabilität wurden weitere solche Prüfkörper anschliessend an die Aushärtung während 10 Tagen im Normklima während weiteren 7 Tagen in einem Umluftofen bei 100 °C gelagert und nach Abkühlen auf Raumtemperatur wie beschrieben auf Zugfestigkeit, Bruchdehnung und E-Modul 5% geprüft. Diese Resultate sind mit dem Zusatz **"+7d 100°C"** versehen. Eine signifikante Abnahme von Zugfestigkeit und E-Modul im Vergleich zu den Werten nach 10d NK zeigt eine eingeschränkte Hitzestabilität.

Die **Shore A**-Härte wurde nach DIN 53505 an während 10 Tagen im Normklima gehärteten Prüfkörpern bestimmt. Diese Resultate sind mit dem Zusatz **"10d NK"** versehen.

Zur Bestimmung der Hitze- und Hydrolysestabilität wurden weitere Shore A-Prüfkörper nach 10 Tagen Aushärtung im Normklima entweder zusätzlich während 7 Tagen in einem Umluftofen bei 100 °C gelagert oder zusätzlich während 7 Tagen bei 70 °C und 100 % relativer Feuchtigkeit gelagert und nach Abkühlen auf Raumtemperatur jeweils wie beschrieben die Shore A-Härte bestimmt. Diese Resultate sind mit dem Zusatz **"+7d 100°C"** bzw. **"+7d 70°C/100%rF"** versehen.

Bei der Aushärtung entstand jeweils ein nicht-klebriges, dehnbares Material.

Die Resultate der durchgeführten Prüfungen sind in den Tabellen 2 bis 4 angegeben.

Bei dem mit "**(Ref.)**" bezeichneten Beispiel **Z-7** handelt es sich um ein Vergleichsbeispiel mit einem aromatischen Polycarbodiimid.

**Tabelle 2: Zusammensetzung und Eigenschaften von Z-1 bis Z-7.**

| **Beispiel** | | **Z-1** | **Z-2** | **Z-3** | **Z-4** | **Z-5** | **Z-6** | **Z-7 (Ref.)** |
|---|---|---|---|---|---|---|---|---|
| **erste Komponente:** | | | | | | | | |
| | Säure | **S1** | **S2** | **S3** | **S3** | **S4** | **S3** | **S3** |
| | | 13.1 | 15.9 | 20.2 | 20.2 | 20.3 | 19.1 | 12.1 |
| | Diisodecylphthalat | 15.7 | 15.7 | 15.7 | 15.8 | 15.7 | 15.7 | 7.5 |
| | CaCO₃ gefällt ¹ | 25.1 | 25.1 | 25.1 | 23.7 | 25.1 | 25.1 | 12.1 |
| | pyrogene Kieselsäure | 1.6 | 1.6 | 1.6 | - | 1.6 | 1.6 | 0.8 |
| | Russ ² | - | - | - | 7.9 | - | - | - |

| **zweite-Komponente:** | | | | | | | | |
|---|---|---|---|---|---|---|---|---|
| | PCDI **XL-725** | 14.5 | 11.7 | 7.4 | 7.4 | 7.3 | - | - |
| | PCDI **XL-755** | - | - | - | - | - | 8.5 | - |
| | PCDI **AR-1** | - | - | - | - | - | - | 33.9 |
| | Gelierzeit [h:min] | 2:10 | 3:00 | 3:30 | > 2h | 5:00 | 4:00 | 0:04 |
| 10d NK: | | | | | | | | |
| | Zugfestigkeit [MPa] | 1.9 | 0.8 | 1.5 | 1.6 | 1.1 | 1.1 | 0.7 |
| | Bruchdehnung | 34% | 34 % | 99 % | 110 % | 67 % | 30% | 490 % |
| | E-Modul 5% [MPa] | 7.2 | 2.4 | 2.4 | 1.7 | 1.5 | 3.3 | 0.1 |
| +7d 100°C: | | | | | | | | |
| | Zugfestigkeit [MPa] | 2.1 | 1.1 | 1.6 | 2.2 | 1.2 | 1.1 | n.m.³ |
| | Bruchdehnung | 46% | 47 % | 139 % | 110 % | 75 % | 41 % | n.m.3 |
| | E-Modul 5% [MPa] | 5.2 | 2.0 | 1.6 | 2.3 | 1.3 | 2.2 | n.m.3 |
| Shore A | (10d NK) | 67 | 51 | 46 | 45 | 43 | 53 | n.b.⁴ |
| | (+ 7d 100°C) | 56 | 32 | 33 | 53 | 28 | 46 | n.b.⁴ |
| | (+ 7d 70/100) | 71 | 56 | 52 | 40 | 45 | 53 | n.b.⁴ |

| | | | | | | | | |
|---|---|---|---|---|---|---|---|---|
| ¹ Socal^{®} U1S2 (von Imerys) ² Monarch^{®} 570 (von Cabot) ³ nicht messbar (flüssig) ⁴ nicht bestimmt (Prüfung nicht durchgeführt) | | | | | | | | |

**Tabelle 3: Zusammensetzung und Eigenschaften von Z-8 bis Z-13.**

| **Beispiel** | | **Z-8** | **Z-9** | **Z-10** | **Z-11** | **Z-12** | **Z-13** |
|---|---|---|---|---|---|---|---|
| **erste Komponente:** | | | | | | | |
| | Säure | **S5** | **S6** | **S7** | **S8** | **S9** | **S10** |
| | | 20.5 | 20.5 | 23.3 | 16.8 | 9.5 | 11.9 |
| | Diisodecylphthalat | 15.7 | 15.7 | 5.1 | 15.7 | 15.7 | 15.7 |
| | CaCO₃ gefällt ¹ | 25.1 | 25.1 | 25.1 | 25.1 | 25.1 | 25.1 |
| | pyrogene Kieselsäure | 1.6 | 1.6 | 1.6 | 1.6 | 1.6 | 1.6 |
| | Triethylamin | 0.7 | 0.8 | 0.5 | 0.6 | 0.4 | - |

| **zweite-Komponente:** | | | | | | | |
|---|---|---|---|---|---|---|---|
| | PCDI **XL-725** | 7.1 | 7.1 | 4.2 | 10.8 | 18.1 | 15.7 |
| | Gelierzeit [h:min] | 0:15 | 0:38 | 0:02 | 0:07 | 0:35 | 0:05 |
| 10d NK: | | | | | | | |
| | Zugfestigkeit [MPa] | 2.4 | 1.5 | 2.1 | 0.5 | 1.0 | 1.1 |
| | Bruchdehnung | 179 % | 133 % | 130 % | 17 % | 17 % | 31 % |
| | E-Modul 5% [MPa] | 2.0 | 1.5 | 2.4 | 2.2 | 7.1 | 5.4 |
| +7d 100°C: | | | | | | | |
| | Zugfestigkeit [MPa] | | 1.1 | | 1.4 | 0.7 | 0.8 |
| | Bruchdehnung | n.b.² | 160 % | n.b.² | 10 % | 6% | 20% |
| | E-Modul 5% [MPa] | | 0.8 | | 15.7 | 10.5 | 4.7 |
| Shore | A (10d NK) | 47 | 43 | 53 | 51 | 73 | 59 |
| | (+ 7d 100°C) | 12 | 29 | 38 | 71 | 75 | 61 |
| | (+ 7d 70/100) | 33 | 18 | 43 | 47 | 73 | 44 |

| | | | | | | | |
|---|---|---|---|---|---|---|---|
| ¹ Socal^{®} U1S2 (von Imerys) ² nicht bestimmt (Prüfung nicht durchgeführt) | | | | | | | |

**Tabelle 4: Zusammensetzung und Eigenschaften von Z-14 bis Z-20.**

| **Beispiel** | | **Z-14** | **Z-15** | **Z-16** | **Z-17** | **Z-18** | **Z-19** | **Z-20** |
|---|---|---|---|---|---|---|---|---|
| **erste Komponente:** | | | | | | | | |
| | Säure | **S11** | **S11** | **S11** | **S12** | **S13** | **S13** | **S14** |
| | | 15.7 | 15.7 | 15.7 | 16.0 | 18.0 | 18.0 | 18.2 |
| | Diisodecylphthalat | 15.7 | 15.7 | 15.8 | 15.7 | 15.7 | 15.8 | 15.7 |
| | CaCO₃ gefällt ¹ | 25.1 | 25.1 | 23.7 | 25.1 | 25.1 | 23.7 | 25.1 |
| | pyrogene Kieselsäure | 1.6 | 1.6 | - | 1.6 | 1.6 | - | 1.6 |
| | Russ ² | - | - | 7.9 | - | - | 7.9 | |
| | Triethylamin | - | 0.3 | - | - | - | - | - |

| **zweite-Komponente:** | | | | | | | | |
|---|---|---|---|---|---|---|---|---|
| | PCDI **XL-725** | 11.9 | 11.9 | 11.9 | 11.6 | 9.6 | 9.6 | 9.4 |
| | Gelierzeit [h:min] | 0:04 | 0:45 | 0:04 | 0:06 | 0:30 | 0:09 | 0:12 |
| 10d NK: | | | | | | | | |
| | Zugfestigkeit [MPa] | 0.9 | 0.9 | 1.4 | 0.9 | 0.29 | 1.1 | 0.7 |
| | Bruchdehnung | 35 % | 41 % | 32 % | 34 % | 56 % | 53% | 53% |
| | E-Modul 5% [MPa] | 2.3 | 2.3 | 4.0 | 2.7 | 0.7 | 2.0 | 1.2 |
| +7d 100°C: | | | | | | | | |
| | Zugfestigkeit [MPa] | 0.8 | 0.7 | 1.3 | 0.5 | 0.24 | 1.6 | 0.5 |
| | Bruchdehnung | 29 % | 30% | 27 % | 30 % | 28 % | 56% | 41 % |
| | E-Modul 5% [MPa] | 2.5 | 2.4 | 4.7 | 2.0 | 1.2 | 3.1 | 1.3 |
| Shore A | (10d NK) | 45 | 46 | 52 | 44 | 16 | 33 | 37 |
| | (+ 7d 100°C) | 42 | 45 | 61 | 27 | 11 | 51 | 15 |
| | (+ 7d 70/100) | 37 | 39 | 59 | 28 | 5 | 46 | 21 |

| | | | | | | | | |
|---|---|---|---|---|---|---|---|---|
| ¹ Socal^{®} U1S2 (von Imerys) ² Monarch^{®} 570 (von Cabot) | | | | | | | | |

## Patentansprüche

1. Härtbare Zusammensetzung umfassend
- eine erste Komponente enthaltend mindestens eine bei Raumtemperatur flüssige Polycarbonsäure mit einem mittleren Molekulargewicht Mₙ von 500 bis 20'000 g/mol, und
- eine zweite Komponente enthaltend mindestens ein aliphatisches Polycarbodiimid,
wobei die Zusammensetzung weniger als 10 Gewichts-% Wasser bezogen auf die gesamte Zusammensetzung enthält.

2. Zusammensetzung gemäss Anspruch 1, **dadurch gekennzeichnet, dass** das Verhältnis der Anzahl Carbodiimidgruppen zur Anzahl Carbonsäuregruppen in der Zusammensetzung im Bereich von 0.8 bis 1.5, bevorzugt 1 bis 1.3, liegt.

3. Zusammensetzung gemäss einem der Ansprüche 1 bis 2, **dadurch gekennzeichnet, dass** die Polycarbonsäure ein mittleres Molekulargewicht Mₙ von 500 bis 10'000 g/mol, bevorzugt 1'000 bis 8'000 g/mol, insbesondere 1'500 bis 5'000 g/mol, aufweist.

4. Zusammensetzung gemäss einem der Ansprüche 1 bis 3, **dadurch gekennzeichnet, dass** die erste Komponente insgesamt eine mittlere Carbonsäure-Funktionalität von 1.6 bis 4, bevorzugt 1.8 bis 3.5, insbesondere 2 bis 3, aufweist.

5. Zusammensetzung gemäss einem der Ansprüche 1 bis 4, **dadurch gekennzeichnet, dass** die Polycarbonsäure ein Derivat von Rizinusöl ist.

6. Zusammensetzung gemäss einem der Ansprüche 1 bis 4, **dadurch gekennzeichnet, dass** die Polycarbonsäure eine Dimer- oder Trimerfettsäure oder ein Derivat einer Dimer- oder Trimerfettsäure ist.

7. Zusammensetzung gemäss einem der Ansprüche 1 bis 4, **dadurch gekennzeichnet, dass** die Polycarbonsäure ein Poly(oxyalkylen)-Rückgrat aufweist.

8. Zusammensetzung gemäss einem der Ansprüche 1 bis 4, **dadurch gekennzeichnet, dass** die Polycarbonsäure ein Kohlenwasserstoff-Rückgrat aufweist.

9. Zusammensetzung gemäss einem der Ansprüche 1 bis 8, **dadurch gekennzeichnet, dass** die Polycarbonsäure Endgruppen ausgewählt aus der Formel (I), der Formel (II) und der Formel (III) aufweist, 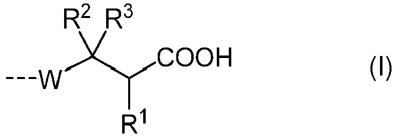 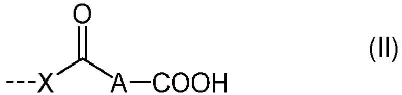 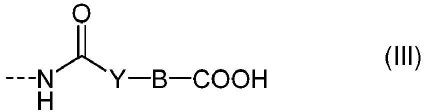 wobei
R¹, R² und R³ jeweils unabhängig voneinander für H oder Methyl stehen, A für einen gegebenenfalls ein Sauerstoffatom enthaltenden zweiwertigen Kohlenwasserstoffrest mit 2 bis 8 C-Atomen steht,
B für einen zweiwertigen, gegebenenfalls ein Sauerstoffatom enthaltenden Kohlenwasserstoffrest mit 1 bis 8 C-Atomen steht, und
W, X, und Y unabhängig voneinander für O, NR⁴ oder S stehen, wobei R⁴ für H oder einen Alkylrest mit 1 bis 8 C-Atomen, insbesondere für H, steht.

10. Zusammensetzung gemäss einem der Ansprüche 1 bis 9, **dadurch gekennzeichnet, dass** das aliphatische Polycarbodiimid bei Raumtemperatur flüssig ist.

11. Zusammensetzung gemäss einem der Ansprüche 1 bis 10, **dadurch gekennzeichnet, dass** die zweite Komponente insgesamt eine mittlere Carbodiimid-Funktionalität von 1.6 bis 6, bevorzugt 1.8 bis 5, insbesondere 2 bis 4, aufweist.

12. Zusammensetzung gemäss einem der Ansprüche 1 bis 11, **dadurch gekennzeichnet, dass** die Carbodiimidgruppen des aliphatischen Polycarbodiimids abgeleitet sind von mindestens einem Diisocyanat ausgewählt aus der Gruppe bestehend aus 1,6-Hexandiisocyanat, 2,2(4),4-Trimethyl-1,6-hexandiisocyanat, Isophorondiisocyanat und 4,4'-Diisocyanatodicyclohexylmethan.

13. Zusammensetzung gemäss einem der Ansprüche 1 bis 12, **dadurch gekennzeichnet, dass** mindestens ein weiterer Bestandteil ausgewählt aus Weichmachern, Füllstoffen und Rheologie-Modifizierern enthalten ist.

14. Ausgehärtete Zusammensetzung erhalten aus der härtbaren Zusammensetzung gemäss einem der Ansprüche 1 bis 13 nach dem Vermischen der beiden Komponente.

15. Verwendung der Zusammensetzung gemäss einem der Ansprüche 1 bis 13 als Vergussmasse, Klebstoff oder Beschichtung, wobei die erste und die zweite und gegebenenfalls vorhandene weitere Komponenten miteinander vermischt werden und die vermischte Zusammensetzung im flüssigen Zustand auf mindestens ein Substrat appliziert wird.
